# EUROPEAN PATENT APPLICATION

(11) **EP 4 804 440 A1**
(43) Date of publication of application: **09.09.2026**
(21) Application number: 23957047.6
(22) Date of filing: 30.10.2023
(51) Int. Cl.: H04L 5/00

(54) **METHOD AND APPARATUS FOR REPORTING AND CONFIGURING CHANNEL STATE INFORMATION**

(71) Applicant: 1FINITY INC., Kawasaki-shi, Kanagawa 211-8588 (JP)
(72) Inventor: ZHU, Jing, Beijing 100022 (CN); ZHANG, Lei, Beijing 100022 (CN)
(74) Representative: Haseltine Lake Kempner LLP
(86) International application number: PCT/CN2023/127832
(87) International publication number: WO 2025/091166

(57) **Abstract**

Embodiments of the present application provide a method and an apparatus for reporting and configuring channel state information. The method includes: a terminal equipment receives a CSI report configuration from a network device, the CSI report configuration including L sub-configurations; the terminal equipment receives indication information from the network device, the indication information being at least used for indicating and/or triggering and/or activating N sub-configurations of the L sub-configurations; and the terminal equipment reports or drops a CSI report according to a CSI reference resource and the indicated and/or triggered and/or activated N sub-configurations.

## Description

### TECHNICAL FIELD

Embodiments of the present application relate to the field of communications technologies.

### BACKGROUND

As an important part of global new infrastructure construction, 5G communication networks have experienced rapid development worldwide in recent years. The scale of network is getting larger and larger, and the energy consumption of operators continues to grow. Taking data released by Chinese Ministry of Industry and Information Technology as an example, energy consumption increased by about 80% in 2022 compared to 2015. With construction of 5G and large-scale commercial use of 5G Active Antenna Unit (AAU), compared to main used Remote Radio Unit (RRU) in 3G and 4G, energy consumption of the AAU also increases exponentially due to their higher power consumption. 5G has defined three major service types: Enhanced Mobile Broadband (eMBB), massive Machine Type of Communication (mMTC), and Ultra Reliable Low Latency Communication (URLLC). This has led to an increasing number of 5G small packet burst services, with base stations operating 24 hours a day without interruption, and daily energy consumption of 5G sites will also be more than twice that of 4G.

3GPP has introduced key technologies such as Massive MIMO and larger radio frequency bandwidth and the like in the 5G era. 5G supports higher data rates, larger data traffic, and requires more transmission bandwidth. High frequency band deployment will also be the main frequency band for future expansion of 5G. The high frequency band transmission characteristics limits a coverage of a site, resulting in denser deployment of 5G sites, and the energy consumption caused by increase of the sites will bring huge operating cost pressure to the operators. Therefore, network energy saving is of great significance for saving operating costs, and 5G network energy saving is an urgent problem to be solved.

In order to achieve energy saving, a network device may perform energy-saving processing in a time domain, a frequency domain, a spatial domain, and/or an energy domain according to a network load situation. For example, in terms of the spatial domain and the energy domain, the network device may turn off some antennas when a load is low to achieve energy saving. In terms of the time domain, the network device may introduce a cell-level discontinuous transmission/reception technology to prevent the network device from transmitting and/or receiving signals during some sleep periods to achieve energy saving.

It should be noted that, the above introduction to the background is merely for the convenience of clear and complete description of the technical solution of the present application, and for the convenience of understanding of persons skilled in the art. It cannot be regarded that the above technical solution is commonly known to persons skilled in the art just because that the solution has been set forth in the background of the present application.

### SUMMARY

The inventor finds that, the use of various energy-saving technologies in a network device may reduce energy consumption, but provisions of existing protocols may not be fully applicable to network energy saving scenarios. For example, in existing technology, in order to obtain a Channel State Information (CSI) measurement resource required to calculate CSI, in a case that at least one Channel State Information Reference Signal (CSI-RS) resource set is received no later than a CSI reference resource, CSI reporting of this time is performed, otherwise the CSI reporting of this time is dropped.

However, in some scenarios (such as an energy-saving mode) of wireless communication applications, even if there is only one CSI-RS resource set and part of the CSI-RS resources are later than the CSI reference resource, it is possible to obtain all CSI measurement resources required to calculate CSI, thereby reporting the CSI. Therefore, in network energy saving scenarios, how to drop a CSI report according to the CSI reference resource is an urgent problem to be solved.

To address at least one of above problems, embodiments of the present application provide a method and an apparatus for reporting and configuring channel state information.

According to an aspect of the embodiments of the present application, there is provided with a method for reporting channel state information (CSI), including:
receiving, by a terminal equipment, a CSI report configuration from a network device, the CSI report configuration including L sub-configurations;
receiving, by the terminal equipment, indication information from the network device, the indication information being at least used for indicating and/or triggering and/or activating N sub-configurations of the L sub-configurations; and
reporting or dropping, by the terminal equipment, a CSI report according to a CSI reference resource and the indicated and/or triggered and/or activated N sub-configurations.

According to another aspect of the embodiments of the present application, there is provided with an apparatus for reporting channel state information (CSI), including:
a receiving unit configured to receive a CSI report configuration from a network device, the CSI report configuration including L sub-configurations; and receive indication information from the network device, the indication information being at least used for indicating and/or triggering and/or activating N sub-configurations of the L sub-configurations; and
a processing unit configured to report or drop a CSI report according to a CSI reference resource and the indicated and/or triggered and/or activated N sub-configurations.

According to another aspect of the embodiments of the present application, there is provided with a method for configuring channel state information (CSI), including:
transmitting, by a network device, a CSI report configuration to a terminal equipment, the CSI report configuration including L sub-configurations; and
transmitting, by the network device, indication information to the terminal equipment, the indication information being at least used for indicating and/or triggering and/or activating N sub-configurations among the L sub-configurations, wherein the terminal equipment reports or drops a CSI report according to a CSI reference resource and the indicated and/or triggered and/or activated N sub-configurations.

According to another aspect of the embodiments of the present application, there is provided with an apparatus for configuring channel state information (CSI), including:
a first transmitting unit configured to transmit a CSI report configuration to a terminal equipment, the CSI report configuration including L sub-configurations; and
a second transmitting unit configured to transmit indication information to the terminal equipment, the indication information being at least used for indicating and/or triggering and/or activating N sub-configurations of the L sub-configurations, wherein the terminal equipment reports or drops a CSI report according to a CSI reference resource and the indicated and/or triggered and/or activated N sub-configurations.

According to another aspect of the embodiments of the present application, there is provided with a communication system, including:
a network device configured to transmit a CSI report configuration to a terminal equipment, the CSI report configuration including L sub-configurations; transmit indication information to the terminal equipment, the indication information being at least used for indicating and/or triggering and/or activating N sub-configurations of the L sub-configurations; and
a terminal equipment configured to report or drop a CSI report according to a CSI reference resource and the indicated and/or triggered and/or activated N sub-configurations.

One of beneficial effects of embodiments of the present application is that CSI reporting can be performed even if in a case that there is only one CSI-RS resource set and part of CSI-RS resources are later than a CSI reference resource, thereby being able to reduce a drop rate of a CSI report in some scenarios (such as an energy-saving mode) of wireless communication applications, and improving overall performance of the network.

With reference to the specification and drawings below, a specific embodiment of the present application is disclosed in detail, which specifies the manner in which the principle of the present application may be adopted. It should be understood that, the scope of the embodiments of the present application is not limited. Within the scope of the spirit and clause of the appended claims, the embodiments of the present application include many variations, modifications and equivalents.

The features described and/or shown for one embodiment can be used in one or more other embodiments in the same or similar manner, can be combined with the features in other embodiments or replace the features in other embodiments.

It should be emphasized that, the term "include/comprise" refers to, when being used in the text, existence of features, parts, steps or assemblies, without exclusion of existence or attachment of one or more other features, parts, steps or assemblies.

### BRIEF DESCRIPTION OF THE DRAWINGS

Elements and features described in one of the drawings or embodiments of the present application may be combined with the elements and features shown in one or more other drawings or embodiments. Moreover, in the drawings, similar reference signs indicate corresponding parts in several drawings and may be used to indicate corresponding parts used in more than one embodiment.
FIG. 1 is a schematic diagram of a communication system in embodiments of the present application;
FIG. 2 is a schematic diagram of a slot for CSI reporting and a CSI reference resource in the embodiments of the present application;
FIG. 3 is an exemplary diagram of a periodic measurement resource in the embodiments of the present application;
FIG. 4 is a schematic diagram of a method for reporting channel state information (CSI) in the embodiments of the present application;
FIG. 5 is an exemplary diagram of a slot for CSI reporting in the embodiments of the present application;
FIG. 6 is another exemplary diagram of a slot for CSI reporting in the embodiments of the present application;
FIG. 7 is a schematic diagram of a CSI configuring method in the embodiments of the present application;
FIG. 8 is a schematic diagram of an apparatus for reporting channel state information (CSI) in the embodiments of the present application;
FIG. 9 is a schematic diagram of a CSI configuring apparatus in the embodiments of the present application;
FIG. 10 is a schematic diagram of a network device in the embodiments of the present application; and
FIG. 11 is a schematic diagram of a terminal equipment in the embodiments of the present application.

### DETAILED DESCRIPTION

With reference to the drawings, the foregoing and other features of the present application will become apparent through the following specification. The specification and the accompanying drawings specifically disclose the particular embodiment of the present application, showing part of the embodiment in which the principle of the present application can be adopted, it should be understood that the present application is not limited to the described embodiment, on the contrary, the present application includes all modifications, variations and equivalents that fall within the scope of the appended claims.

In embodiments of the present application, the terms "first", "second", etc., are used to distinguish different elements by their appellation, but do not indicate the spatial arrangement or chronological order of these elements, etc., and these elements shall not be limited by the terms. The term "and/or" includes any and all combinations of one or more of the terms listed in association with the term. The terms "contain", "include", "have", etc., refer to the presence of the stated feature, element, component or assembly, but do not exclude the presence or addition of one or more other features, elements, components or assemblies.

In embodiments of the present application, the singular forms "one", "the", etc., including the plural forms, shall be broadly understood as "a sort of" or "a kind of" and not limited to the meaning of "one"; furthermore, the term "said" shall be understood to include both the singular form and the plural form, unless it is expressly indicated otherwise in the context. In addition, the term "according to" should be understood to mean "at least partially according to ...", and the term "based on" should be understood to mean "based at least partially on ...", unless it is expressly indicated otherwise in the context.

In embodiments of the present application, the term "communications network" or "wireless communications network" may refer to a network that complies with any of the following communication standards, such as Long Term Evolution (LTE), Enhanced Long Term Evolution (LTE-A), Wideband Code Division Multiple Access (WCDMA), High-Speed Packet Access (HSPA), etc.

In addition, the communication between the devices in the communication system can be carried out according to the communication protocol of any stage, for example, including but not being limited to 1G (generation), 2G, 2.5G, 2.75G, 3G, 4G, 4.5G and 5G, New Radio (NR), future 6G and etc., and/or other communication protocols currently known or to be developed in the future.

In embodiments of the present application, the term "network device" refers to, for example, a device in the communication system that connects a terminal equipment to the communication network and provides services to the terminal equipment. The network device may include but is not limited to: a base station (BS), an access point (AP), a transmission reception point (TRP), a broadcast transmitter, a mobile management entity (MME), a gateway, a server, a radio network controller (RNC), a base station controller (BSC), etc.

The base station may include, but is not limited to, a node B (NodeB or NB), an evolution node B (eNodeB or eNB), 5G base station (gNB), an IAB donor, etc., and may also include a remote radio head (RRH), a remote radio unit (RRU), a relay, or a low-power node (such as femto, pico, etc.). The term "base station" may include some or all of their functions, with each base station providing communication coverage to a specific geographic area. The term "cell" can refer to a base station and/or its coverage area, depending on the context in which the term is used.

In the embodiments of this disclosure, the term "user equipment (UE)" or "terminal equipment (TE)" refers to, for example, an equipment accessing to a communication network and receiving network services via a network device, and may also be referred to as. The terminal equipment can be fixed or movable, and can also be called a mobile station (MS), a terminal, a subscriber station (SS), an access terminal (AT), a station, etc.

The terminal equipment may include but is not limited to: a cellular phone, a personal digital assistant (PDA), a wireless modems, a wireless communication device, a handheld device, a machine-type communication device, a laptop computer, a cordless phone, a smart phone, a smart watch, a digital camera, etc.

For another example, in scenarios such as Internet of Things (IoT), the terminal equipment may also be a machine or an apparatus that performs monitoring or measurement, and may include, but is not limited to, a machine type communication (MTC) terminal, a vehicle communication terminal, a device to device (D2D) terminal, a machine to machine (M2M) terminal, and etc.

In addition, the term "network side" or "network device side" refers to the side of the network, which may be a base station or may include one or more network devices as described above. The term "user side" or "terminal side" or "terminal equipment side" refers to the side of the user or terminal, which may be a UE or may include one or more terminal equipments as described above. Without specifically indicated, "device" can refer to a network device or a terminal equipment.

Hereinafter the scenarios of in the embodiments of the present application are illustrated by examples, but which is not limited in the present application.

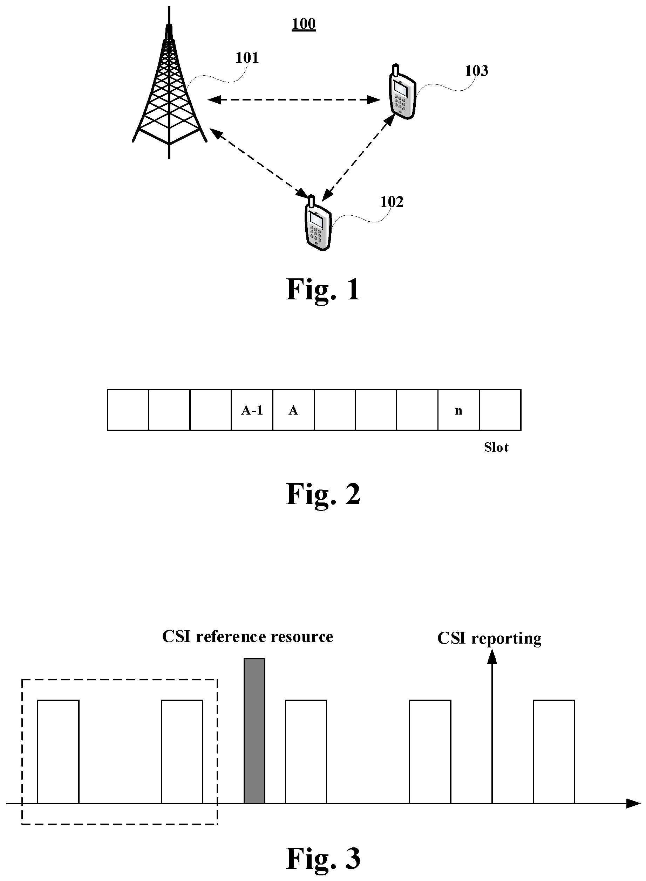

FIG. 1 is a schematic diagram of a communication system in embodiments of the present application, illustrating the case of the terminal equipment and the network device as examples. As shown in FIG. 1, a communication system 100 may include a network device 101 and terminal equipments 102 and 103. For simplicity, FIG. 1 illustrates only two terminal equipments and one network device as examples, but which is not limited in the embodiments of the present application.

In the embodiments of the present application, existing services or services that can be implemented in the future may be transmitted between the network device 101 and the terminal equipments 102, 103. For example, these services may include, but are not limited to, enhanced Mobile Broadband (eMBB), massive Machine Type Communication (mMTC), and Ultra-Reliable and Low-Latency Communication (URLLC), and etc.

It is worth noting that FIG. 1 shows that two terminal equipments 102 and 103 are within a coverage of the network equipment 101, but which is not limited in the present application. Both of the two terminal equipments 102 and 103 may not be within a coverage of the network device 101, or one terminal equipment 102 is within the coverage of the network device 101 and the other terminal equipment 103 is outside the coverage of the network device 101.

In a mobile communication system, usually a terminal equipment measures channel state information (CSI) according to indication and configuration of a network device, and then reports the measured CSI to the network device. When scheduling the terminal equipment, the network device may refer to the CSI to schedule the terminal equipment to perform transmission using appropriate resources by an appropriate transmission method. Different terminal equipments may experience different physical channel conditions, and resources may be reasonably and effectively used by using a CSI feedback mechanism, thereby transmission efficiency of the entire network may be improved.

In a CSI feedback mechanism of NR, a terminal equipment measures a reference signal according to a CSI configuration and performs reporting. The CSI may include a channel quality indicator (CQI), a precoding matrix indicator (PMI), a CSI-RS resource indicator (CRI), a synchronization signal/physical broadcast channel (SS/PBCH) resource indicator (SSBRI), a layer indicator (LI), and a rank indicator (RI).

In a CSI reporting framework of the NR, a CSI reporting is performed in a way that the CSI reporting is associated with CSI resource(s). The CSI reporting may be configured as the following three types: a periodic CSI (P-CSI) reporting which is transmitted only on a physical uplink control channel (PUCCH); a semi-persistent CSI (SP-CSI) reporting which is transmitted on a PUCCH or a physical uplink shared channel (PUSCH); and an aperiodic CSI (AP-CSI) reporting which is transmitted only on a PUSCH.

The CSI reference resource is exemplarily described hereinafter. The CSI reference resource may be a time-frequency resource. In a time domain, the CSI reference resource is a slot; in a frequency domain, the CSI reference resource is a measurement granularity of the CSI. For example, when the measurement granularity of the CSI is subband, a size of the CSI reference resource in the frequency domain is subband. For another example, when the measurement granularity of the CSI is wideband, a size of the CSI reference resource in the frequency domain is wideband.

The CSI reference resource is related to the CSI reporting. Each CSI reporting time instance corresponds to one CSI reference resource. For example, for periodic CSI (P-CSI) reporting, each reporting time instance corresponds to one CSI reference resource. Assuming that a slot for CSI reporting is n, a position of the CSI reference resource in the time domain is n - nCSI_ref. The CSI reference resource is a downlink resource, so that the slot is a downlink slot. Therefore, a reporting slot n corresponding to CSI reporting time instance n' is calculated according to the following equation: $n = \left⌊n′⋅\frac{{2}^{{μ}_{DL}}}{{2}^{{μ}_{UL}}}\right⌋$ where *µ_{DL}* and *µ_{UL}* denote uplink and downlink subcarrier spacings respectively. It can be seen that the reporting slot n corresponding to the CSI reporting time instance n' is calculated according to the uplink and downlink subcarrier spacings.

For P-CSI reporting and SP-CSI reporting, if the P-CSI/SP-CSI reporting only corresponds to one measurement resource, nCSI_ref needs to meet the following conditions: nCSI_ref is greater than or equal to 4; nCSI_ref ensures that the CSI reference resource is the minimum value of an effective downlink slot. The measurement resource is a measurement resource configured to a current CSI report, such as CSI-RS or SSB.

FIG. 2 is a schematic diagram of a slot for CSI reporting and a CSI reference resource. The following description is made by taking FIG. 2 as an example. Assumed that uplink and downlink subcarrier spacings are the same and are 15 kHz, i.e., *µ_{DL}* = *µ_{UL}* = 15kHz. According to the above condition, nCSI_ref = 4, a position of a CSI reference resource in the time domain is n-4, i.e., slot A marked in FIG. 2. At this time, it is necessary to determine whether the slot A is an effective downlink slot. If the slot A is an effective downlink slot, then the slot A is the CSI reference resource; if the slot A is not an effective downlink slot, then nCSI_ref = 5, and the position of the CSI reference resource in the time domain is n-5, i.e., slot A-1 marked in FIG. 2. Afterwards, it is necessary to determine whether the slot A-1 is an effective downlink slot. If the slot A-1 is an effective downlink slot, then the slot A-1 is the CSI reference resource. If the slot A-1 is not an effective downlink slot, then nCSI_ref = 6, and determination proceeds until an effective downlink slot is found.

If the P-CSI/SP-CSI reporting corresponds to more than one measurement resource, nCSI_ref needs to meet the following conditions: nCSI_ref is greater than or equal to 5; nCSI_ref ensures that the CSI reference resource is the minimum value of an effective downlink slot. How to determine the CSI reference resource specifically may refer to the above contents.

For the AP-CSI reporting, if downlink control information (DCI) triggering AP-CSI and a position where the AP-CSI is reported are in the same slot, the CSI reference resource is a slot where the DCI triggering the CSI reporting is located; otherwise, nCSI_ref needs to meet the following condition: nCSI_ref is greater than or equal to $\left⌊Z′/{N}_{symb}^{slot}\right⌋$; nCSI_ref ensures that the CSI reference resource is the minimum value of an effective downlink slot. *Z'* is a variable related to processing delay, in the unit of symbol. Details may be found referring to the relevant art. ${N}_{symb}^{slot}$ denotes the number of symbols contained in one slot.

The effective downlink slot needs to meet the following condition: the slot at least includes one downlink or flexible symbol configured by higher layer signaling; the slot is not within a configured measurement gap.

The CSI reference resource may be used to calculate a channel quality indicator (CQI). Channel measurement essentially depends on implementation of a UE. For example, for some UEs with strong capabilities, a target block error rate (BLER) requirement is able to be achieved using a certain modulation and coding scheme (MCS) when a signal to interference plus noise ratio (SINR) = 10 dB. For another example, for some UEs with weak capabilities, the target BLER requirement is able to be achieved only when SINR = 12 dB. Therefore, although SINRs measured by two UEs with different capabilities are both 10 dB, they have different values when providing CQI feedback.

In addition, even for the same UE, different BLERs will be obtained for different Transport Block Sizes (TBS) of data packets. For example, SINR = 10 dB. If a current transmitted TBS is 1000 bits and a specific MCS is selected for transmission, its BLER is 0.01. If the current transmitted TBS is 500 bits and the same MCS is selected for transmission, the corresponding BLER may possibly be 0.1.

Therefore, the CSI reference resource is needed when quantifying a CQI. Assuming that a UE uses CSI-RS to perform channel measurement and obtain channel state, such as SINR. Assuming that one downlink data packet is transmitted on the CSI reference resource, and corresponding channel state is obtained according to CSI-RS measurement. At this time, the UE selects one CQI from a CQI table, and the CQI is able to make a BLER of hypothetically transmitted downlink data packet when transmitted in the measured channel state be smaller than a target BLER. The target BLER is configured by gNB.

The CSI reference resource may also be used to determine measurement resource(s). The network device may configure periodic measurement resources for the terminal equipment. FIG. 3 is an exemplary diagram of the periodic measurement resources. Taking FIG. 3 as an example, the short columns represent periodic measurement resources, and the number of the periodic measurement resources is five. Certainly, the number of the periodic measurement resources may be other, and the present application does not limit time. The arrow denotes a CSI reporting. Which one measurement resource is specifically to be used is determined according to the CSI reference resource.

At present, a measurement resource corresponding to a CSI reporting must be located prior to a CSI reference resource, and only the measurement resource prior to the CSI reference resource may possibly be used for the measurement of the CSI. Taking FIG. 3 as an example, the high column represents the CSI reference resource, and there are two measurement resources located prior to the CSI reference resource, as shown in the dashed box. The network device may further perform configuration by using higher layer signaling to determine which one of the measurement resources located prior to the CSI reference resource is used for measurement. For example, it is possible to configure to use only one resource for measurement, or to use all resources prior to the CSI reference resource.

The reason for using the resources prior to the CSI reference resource for measurement is twofold: on one hand, the gNB needs to know which measurement resource or resources is/are used by the UE for measurement. On the other hand, implementation capability of the UE may be ensured. That is to say, the UE is able to be ensured to have enough time to process the measurement and CSI reporting only when the UE uses the resources prior to the CSI reference resource for CSI measurement.

In the following explanation, without causing confusion, the terms "PUCCH" and "physical uplink control channel" or "uplink control information" are used interchangeably, and the terms "PUSCH" and "physical uplink data channel" or "uplink data" are also used interchangeably.

In addition, transmitting or receiving a PUCCH may be understood as transmitting or receiving uplink control information carried by the PUCCH; transmitting or receiving a PUSCH may be understood as transmitting or receiving uplink data carried by the PUSCH. In the embodiments of the present application, the terms "indication", "activation", and "triggering" may be used interchangeably or used in combination of two or more.

### Embodiments of a First Aspect

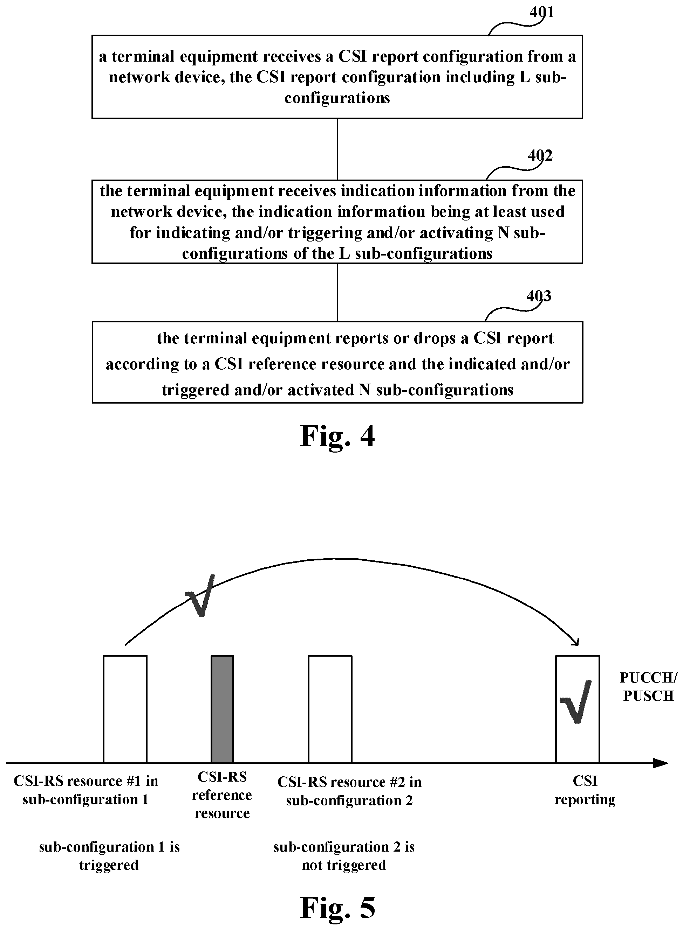

The embodiments of the present application provide a method for reporting channel state information (CSI). FIG. 4 is a schematic diagram of a method for reporting CSI in the embodiments of the present application. As shown in FIG. 4, the method includes:
401: a terminal equipment receives a CSI report configuration from a network device, the CSI report configuration including L sub-configurations;
402: the terminal equipment receives indication information from the network device, the indication information being at least used for indicating and/or triggering and/or activating N sub-configurations of the L sub-configurations; and
403: the terminal equipment reports or drops a CSI report according to a CSI reference resource and the indicated and/or triggered and/or activated N sub-configurations.

It is worth noting that FIG. 4 above only schematically illustrates the embodiments of the present application, but the present application is not limited to this. For example, the order of execution between operations may be adjusted appropriately, and some other operations may be added or one or more operations may be removed. Those skilled in the art may make appropriate variations in accordance with the above contents, and which is not limited to the disclosure of FIG. 4 above.

In some embodiments, a CSI report configuration includes one or more sub-configurations. For example, one CSI report configuration may include L sub-configurations, each sub-configuration corresponds to one spatial-domain/energy-domain adaptation mode, and each sub-configuration corresponds to one CSI result; if L of the CSI report configuration is greater than 1, each sub-configuration includes identification information or indication parameters or the like. L and N are both positive integers, and L is greater than or equal to N.

In some embodiments, one of the L sub-configurations includes port subset indication information or CSI-RS list information; when the sub-configuration contains the CSI-RS list information, the sub-configuration corresponds to at least one CSI-RS.

For example, one of L sub-configurations at least includes one sub-configuration index/ID to represent the sub-configuration. L sub-configurations correspond to a plurality of sub-configuration indexes/IDs, but the present application is not limited to this. For example, the CSI report configuration includes 4 sub-configurations, the CSI report configuration is associated with one CSI-RS resource set that contains 8 CSI-RS resources. In the CSI report configuration, the sub-configuration 0 corresponds to one CSI-RS resource ID list, namely CSI-RS resource 0 and CSI-RS resource 1, the sub-configuration 1 corresponds to one CSI-RS resource ID list, namely CSI-RS resource 2 and CSI-RS resource 3, the sub-configuration 2 corresponds to one CSI-RS resource ID list, namely CSI-RS resource 4 and CSI-RS resource 5, and the sub-configuration 3 corresponds to one CSI-RS resource ID list, namely CSI-RS resource 6 and CSI-RS resource 7.

In some embodiments, a CSI reference resource is determined at least according to a slot for CSI reporting. For example, how to determine the CSI reference resource specifically may refer to FIG. 2.

In some embodiments, L sub-configurations are used for semi-persistent CSI reporting or aperiodic CSI reporting.

In some embodiments, a terminal equipment reports or drops a CSI report according to a CSI reference resource and the indicated and/or triggered and/or activated N sub-configurations, including:
the terminal equipment reports the CSI report in a case that CSI-RS resources of the indicated and/or triggered and/or activated N sub-configurations are all no later than the CSI reference resource, and the CSI report corresponds to the N sub-configurations;
the terminal equipment drops the CSI report in a case that at least one CSI-RS resource of the indicated and/or triggered and/or activated N sub-configurations is later than the CSI reference resource, and the CSI report corresponds to the N sub-configurations.

FIG. 5 is an exemplary diagram of a slot for CSI reporting in the embodiments of the present application. The following description is made by taking FIG. 5 as an example.

For example, as shown in FIG. 5, a CSI-RS resource # 1 to which sub-configuration 1 corresponds is no later than the CSI reference resource, and this sub-configuration 1 is indicated and/or triggered and/or activated. A CSI-RS resource # 2 to which sub-configuration 2 corresponds is later than the CSI reference resource, and this sub-configuration 2 is not indicated and/or triggered and/or activated. Because only the sub-configuration 1 is activated in the CSI report configuration, the CSI report only includes a CSI result to which the sub-configuration 1 corresponds and does not include a CSI result to which the sub-configuration 2 corresponds. The CSI-RS resource # 1 to which the sub-configuration 1 corresponds is no later than the CSI reference resource, and the terminal equipment is able to generate the CSI report within the specified time. Therefore, the terminal equipment is able to report the CSI report.

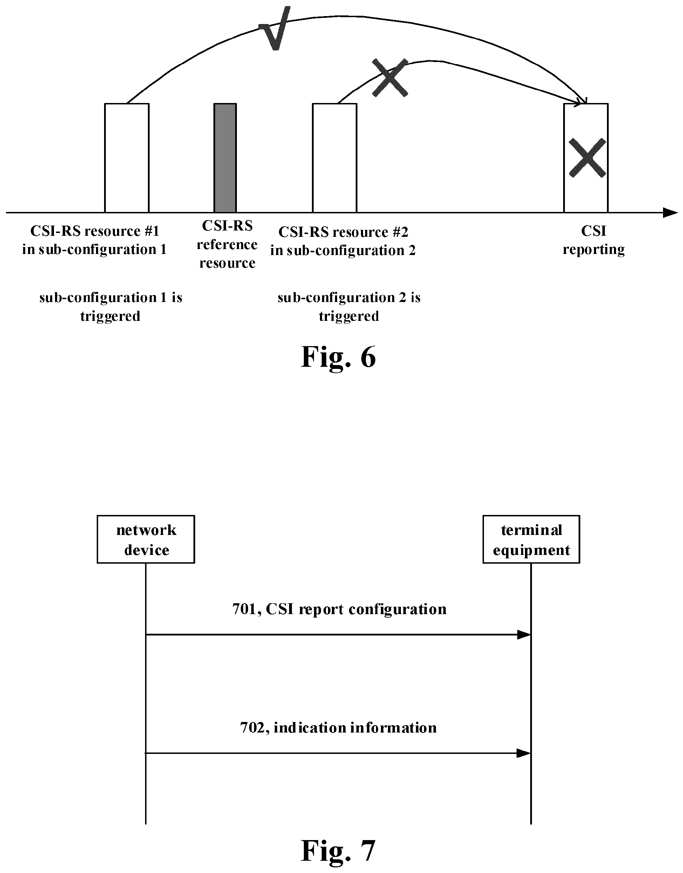

FIG. 6 is another exemplary diagram of a slot for CSI reporting in the embodiments of the present application.

For another example, as shown in FIG. 6, the CSI-RS resource # 1 to which the sub-configuration 1 corresponds is no later than the CSI reference resource, the CSI-RS resource # 2 to which the sub-configuration 2 corresponds is later than the CSI reference resource, and the sub-configuration 1 and the sub-configuration 2 are both indicated and/or triggered and/or activated. Because the sub-configuration 1 and the sub-configuration 2 are activated in the CSI report configuration, the CSI report includes the CSI result to which the sub-configuration 1 corresponds and the CSI result to which the sub-configuration 2 corresponds. However, the terminal device is able to only generate a CSI report to which the sub-configuration 1 corresponds within the specified time, and is unable to generate a CSI report to which the sub-configuration 2 corresponds. Therefore, the terminal equipment is unable to generate a complete CSI report within the specified time, and thus may drop the CSI report.

In some embodiments, a terminal equipment reports or drops a CSI report according to a CSI reference resource and the indicated and/or triggered and/or activated N sub-configurations, including: the terminal equipment reports the CSI report after receiving at least one CSI-RS transmission occasion associated with all triggered sub-configurations for channel measurement and/or at least one CSI-RS and/or CSI-IM transmission occasion associated with all triggered sub-configurations for interference measurement no later than the CSI reference resource; otherwise drops the CSI report.

In some embodiments, a terminal equipment reports or drops a CSI report according to a CSI reference resource and the indicated and/or triggered and/or activated N sub-configurations, including: the terminal equipment reports the CSI report only after receiving at least one CSI-RS transmission occasion associated with all triggered sub-configurations for channel measurement and/or at least one CSI-RS and/or CSI-IM transmission occasion associated with all triggered sub-configurations for interference measurement no later than the CSI reference resource, after channel state information report configuration (reconfiguration) or serving cell activation or BWP change or activation of SP-CSI; otherwise drops the CSI report.

**Table 1**

| |
|---|
| After the CSI report (re)configuration, serving cell activation, BWP change, or activation of SP-CSI, the UE reports a CSI report only after receiving at least one CSI-RS transmission occasion **associated with all triggered sub-configurations** for channel measurement and CSI-RS and/or CSI-IM occasion **associated with all triggered sub-configurations** for interference measurement no later than CSI reference resource and drops the report otherwise. |

Table 1 exemplarily illustrates the relevant description of CSI reporting in the embodiments of the present application, but the present application is not limited to this.

In some embodiments, a terminal equipment reports or drops a CSI report according to a CSI reference resource and the indicated and/or triggered and/or activated N sub-configurations, including: the terminal equipment reports the CSI report after receiving at least one CSI-RS transmission occasion of each CSI-RS resource in a CSI-RS resource set associated with all triggered sub-configurations for channel measurement and/or at least one CSI-RS and/or CSI-IM transmission occasion of each CSI-RS/CSI-IM resource in a CSI-RS/CSI-IM resource set associated with all triggered sub-configurations for interference measurement no later than the CSI reference resource; otherwise drops the CSI report.

In some embodiments, a terminal equipment reports or drops a CSI report according to a CSI reference resource and the indicated and/or triggered and/or activated N sub-configurations, including: the terminal equipment reports the CSI report only after receiving at least one CSI-RS transmission occasion of each CSI-RS resource in a CSI-RS resource set associated with all triggered sub-configurations for channel measurement and/or at least one CSI-RS and/or CSI-IM transmission occasion of each CSI-RS/CSI-IM resource in a CSI-RS/CSI-IM resource set associated with all triggered sub-configurations for interference measurement no later than the CSI reference resource, after channel state information report configuration (reconfiguration) or serving cell activation or BWP change or activation of SP-CSI; otherwise drops the CSI report.

**Table 2**

| |
|---|
| After the CSI report (re)configuration, serving cell activation, BWP change, or activation of SP-CSI, the UE reports a CSI report only after receiving at least one CSI-RS transmission occasion **of each CSI-RS resource associated with/linked to triggered sub-configurations in CSI-RS resource set** for channel measurement and CSI-RS and/or CSI-IM occasion **of each CSI-RS/CSI-IM resource associated with/linked to triggered sub-configurations in CSI-RS/CSI-IM resource set** for interference measurement no later than CSI reference resource and drops the report otherwise. |

Table 2 exemplarily illustrates the relevant description of CSI reporting in the embodiments of the present application, but the present application is not limited to this.

The CSI reporting in the embodiments of the present application has been described schematically in the hereinbefore, and the CSI report configuration will be further explained hereinafter.

In some embodiments, a reporting quantity '*cri-RSRP-Index*' and/or '*none*' in the CSI report configuration is not applied to network energy saving.

In some embodiments, a CSI report configuration includes a sub-configuration list and is provided by a higher-layer parameter *csi-ReportSubConfigList*, and the terminal equipment does not expect the higher-layer parameter *reportQuantity* to be set as '*cri-RSRP-Index*' and/or '*none*'.

**Table 3**

| |
|---|
| If the UE is configured with a *CSI-ReportConfig* that contains a list of sub-configurations, provided by the higher layer parameter [*csi-ReportSubConfigList]*: |
| ...... |
| **The UE does not expect the higher layer parameter reportQuantity to be set to** '**cri-RSRP-Index**'**,** '**none**'. |

Table 3 exemplarily illustrates the relevant description of the CSI report configuration in the embodiments of the present application, but the present application is not limited to this.

In some embodiments, a CSI report configuration includes a sub-configuration list and is provided by a higher-layer parameter *csi-ReportSubConfigList*, and the terminal equipment does not expect the higher-layer parameter *reportQuantity* to be set as '*cri-RSRP*', '*cri-SINR*', '*cri-SINR- Index*', '*cri-RSRP-Index*' or '*none*'.

**Table 4**

| | |
|---|---|
| If the UE is configured with a *CSI-ReportConfig* that contains a list of sub-configurations, provided by the higher layer parameter [*csi-ReportSubConfigList]*: | |
| | - The UE expects to be configured with the higher layer parameter *codebookType* set to 'typeI-SinglePanel' or 'typeI-MultiPanel'. If the UE indicates a capability for supporting mixed codebook combination in a slot with [ABC], each sub-configuration can be configured with the higher layer parameter *codebookType* set to 'typeI-SinglePanel' or 'typeI-MultiPanel'. |
| | - Each sub-configuration can be configured with an antenna port subset using the higher layer bitmap parameter [*port-subsetIndicator*] which contains the bit sequence *p*₀,*p*₁,...,*p*_{*Pm*-1}, where *p*₀ is the MSB and *p*_{*P*m-1} is the LSB, bit *pᵢ* corresponds to antenna port 3000 + i, and *P*m is the number of ports *nrofPorts* configured for the CSI-RS resources(s) within the *NZP-CSI-RS-ResourceSet* contained in the *CSI-ResourceConfig* for channel measurement that corresponds to the *CSI-ReportConfig.* A bit value 0 in [*port-subsetIndicator*] indicates that the corresponding antenna port is disabled for the sub-configuration, whereas bit value 1 indicates that the antenna port is enabled and belongs to the antenna port subset for the sub-configuration. For the derivation of PMI, antenna ports corresponding to all bits with value of 1 in [*port-subsetIndicator*] are mapped to consecutive antenna ports starting at CSI-RS antenna port 3000 in increasing order of the bit position in [*port-subsetIndicator*]. |
| | - If a sub-configuration is configured with an antenna port subset, then the sub-configuration can be configured with a [RI restriction parameter] and, if the number of antenna ports of the subset greater than 2, with [*n1-n2* parameter] if the higher layer parameter *codebookType* is set to 'typeI-SinglePanel' or with [*ng-n1-n2* parameter] if the higher layer parameter *codebookType* is set to 'typeI-MultiPanel', and, if the corresponding number of antenna ports of the subset is 2, with *twoTX-CodebookSubsetRestriction*, where the parameters [RI restriction], [*n1-n2],* [*ng-n1-n2], twoTX-CodebookSubsetRestriction* are as described in Clauses 5.2.2.2.1 and 5.2.2.2.2. |
| | - A sub-configuration can be configured with a list of NZP CSI-RS resources, provided by [*nzp-CSI-RS-resourceList*], which indicates one or more NZP CSI-RS resources, within the *NZP-CSI-RS-ResourceSet* contained in the *CSI-ResourceConfig* for channel measurement which corresponds to the *CSI-ReportConfig.* |
| | [The list of NZP CSI-RS resources is identical to or has no intersection with a list of NZP CSI-RS resources configured for any other sub-configuration(s) within the *CSI-ReportConfig*.] |
| | - A sub-configuration can be configured with a power offset provided by [*powerOffse*t]. |
| | - If a sub-configurations is not configured with [*nzp-CSI-RS-resourceList*] then the sub-configuration shall be associated with all the NZP CSI-RS resources within the *NZP-CSI-RS-ResourceSet* contained in the *CSI-ResourceConfig* for channel measurement which corresponds to the *CSI-ReportConfig.* |
| | - the UE reports CSI(s) for one or more sub-configurations according to Clauses 5.2.1.5.1, 5.2.1.5.2, 5.2.3 and 5.2.4, and according to the higher layer parameter *reportQuantity* configured for that *CSI-ReportConfig*. |
| | - **The UE does not expect the higher layer parameter *reportQuantity* to be set to** '**cri-RSRP**'**,** '**cri-SINR**'**,** '**cri-SINR- Index', 'cri-RSRP-Index', or 'none'**. |

Table 4 exemplarily illustrates the relevant description of the CSI report configuration in the embodiments of the present application, but the present application is not limited to this.

Therefore, by limiting the higher-layer parameter *reportQuantity*, a drop rate of a CSI report in network energy saving scenarios can be reduced.

In some embodiments, '*Trs-info*' and/or '*repetition*' configured in a CSI-RS resource set (*CSI-RS-ResourceSet*) associated with a CSI report configuration is not applied to network energy saving.

In some embodiments, a terminal equipment is configured with a CSI report configuration including a sub-configuration list, and the terminal equipment does not expect a non-zero power CSI-RS resource set (*NZP-CSI-RS- ResourceSet*) associated with the CSI report configuration to be configured with higher-layer parameters '*Trs-info*' and/or '*repetition*'.

**Table 5**

| |
|---|
| If the UE is configured with a CSI report configuration with a list of sub-configurations, the UE does not expect the associated *NZP-CSI-RS-ResourceSet* is configured with higher layer parameter *trs-Info* or *repetition.* |

Table 5 exemplarily illustrates the relevant description of the CSI report configuration in the embodiments of the present application, but the present application is not limited to this.

In some embodiments, a terminal equipment is configured with a CSI report configuration including a sub-configuration list, and the terminal equipment expects a non-zero power CSI-RS resource set (*NZP-CSI-RS-ResourceSet*) associated with the CSI report configuration to be not configured with higher-layer parameters '*Trs-info*' and/or '*repetition*'.

**Table 6**

| |
|---|
| If the UE is configured with a CSI report configuration with a list of sub-configurations, the UE expect the associated *NZP-CSI-RS-ResourceSet* is configured without higher layer parameter *trs-Info* and/or without the higher layer parameter *repetition.* |

Table 6 exemplarily illustrates the relevant description of the CSI report configuration in the embodiments of the present application, but the present application is not limited to this.

In some embodiments, a terminal equipment is configured with a CSI report configuration including a sub-configuration list, and the terminal equipment in a radio resource control (RRC) connection mode does not expect to receive a higher-layer UE specific configuration non-zero power CSI-RS resource set (*NZP-CSI-RS-ResourceSet*), wherein the non-zero power CSI-RS resource set (*NZP-CSI-RS-ResourceSet*) is configured with higher-layer parameters '*Trs-info*' and/or *'repetition'.*

**Table 7**

| |
|---|
| If the UE is configured with a CSI report configuration with a list of sub-configurations, the UE in RRC connected mode is not expected to receive the higher layer UE specific configuration of a *NZP-CSI-RS-ResourceSet* configured with higher layer parameter *trs-Info* or *repetition.* |

Table 7 exemplarily illustrates the relevant description of the CSI report configuration in the embodiments of the present application, but the present application is not limited to this.

In some embodiments, a terminal equipment does not expect to be configured with a CSI report configuration (*CSI-ReportConfig*) linked to a CSI resource configuration *(CSI-ResourceConfig*), wherein the CSI resource configuration *(CSI-ResourceConfig)* includes a non-zero power CSI-RS resource set (*NZP-CSI-RS-ResourceSet*) configured with higher-layer parameters '*Trs-info*' and/or '*repetition*', and the CSI report configuration (*CSI-ReportConfig*) is configured with a sub-configuration list.

**Table 8**

| |
|---|
| A UE does not expect to be configured with a *CSI-ReportConfig* that is linked to a *CSI-ResourceConfig* containing an *NZP-CSI-RS-ResourceSet* configured with *trs-Info* and/or *repetition* and with the CSI-ReportConfig configured with a list of sub-configurations. |

Table 8 exemplarily illustrates the relevant description of the CSI report configuration in the embodiments of the present application, but the present application is not limited to this.

In some embodiments, a terminal equipment is configured with a CSI report configuration including a sub-configuration list, and the terminal equipment does not expect to be configured with a non-zero power CSI-RS resource set (*NZP-CSI-RS-ResourceSet*) configured with higher-layer parameters '*Trs-info*' and/or *'repetition'.*

**Table 9**

| |
|---|
| If a UE is configured with a CSI report configuration with a list of sub-configurations, the UE does not expect to be configured with a *NZP-CSI-RS-ResourceSet* configured with *trs-Info* or *repetition.* |

Table 9 exemplarily illustrates the relevant description of the CSI report configuration in the embodiments of the present application, but the present application is not limited to this.

The embodiments above only schematically illustrate the present application, but the present application is not limited to this, and appropriate variations may also be made on the basis of the above embodiments. For example, the above embodiments may be used separately, or one or more of the above embodiments may be combined.

It can be seen from the above embodiments that CSI reporting can be performed even if in a case that there is only one CSI-RS resource set and part of CSI-RS resources are later than a CSI reference resource, thereby being able to reduce a drop rate of a CSI report in some scenarios (such as an energy-saving mode) of wireless communication applications, and improving overall performance of the network.

### Embodiments of a Second Aspect

The embodiments of the present application provide a method for configuring channel state information (CSI), which is illustrated from a network device side. The embodiments of the second aspect may be combined with the embodiments of the first aspect, and the same content as the embodiments of the first aspect will not be repeated.

FIG. 7 is a schematic diagram of a method for configuring channel state information (CSI) in the embodiments of the present application. As shown in FIG. 7, the method includes:
701: a network device transmits a CSI report configuration to a terminal equipment, the CSI report configuration including L sub-configurations; and
702: the network device transmits indication information to the terminal equipment, the indication information being at least used for indicating and/or triggering and/or activating N sub-configurations of the L sub-configurations, wherein the terminal equipment reports or drops a CSI report according to a CSI reference resource and the indicated and/or triggered and/or activated N sub-configurations.

It is worth noting that FIG. 7 above only schematically illustrates the embodiments of the present application, but the present application is not limited to this. For example, the order of execution between operations may be adjusted appropriately, and some other operations may be added or one or more operations may be removed. Those skilled in the art may make appropriate variations in accordance with the above contents, and which is not limited to the disclosure of FIG. 7 above.

In some embodiments, one of the L sub-configurations includes port subset indication information or CSI-RS list information; when the sub-configuration contains the CSI-RS list information, the sub-configuration corresponds to at least one CSI-RS.

In some embodiments, the CSI reference resource is determined at least according to a slot for CSI reporting; the L sub-configurations are used for semi-persistent CSI reporting or aperiodic CSI reporting.

In some embodiments, a reporting quantity '*cri-RSRP-Index*' and/or '*none*' in the CSI report configuration is not applied to network energy saving.

In some embodiments, the CSI report configuration includes a sub-configuration list and is provided by a higher-layer parameter *csi-ReportSubConfigList*, and the terminal equipment does not expect a higher-layer parameter *reportQuantity* to be set as '*cri-RSRP-Index*' and/or '*none*'.

In some embodiments, the CSI report configuration includes a sub-configuration list and is provided by a higher-layer parameter *csi-ReportSubConfigList*, and the terminal equipment does not expect a higher-layer parameter *reportQuantity* to be set as 'cri-RSRP', 'cri-SINR', 'cri-SINR- Index', '*cri-RSRP-Index*' or '*none*'.

In some embodiments, '*Trs-info*' and/or '*repetition*' configured in a CSI-RS resource set (*CSI-RS-ResourceSet*) associated with the CSI report configuration is not applied to network energy saving.

In some embodiments, the terminal equipment is configured with a CSI report configuration including a sub-configuration list, and the terminal equipment does not expect a non-zero power CSI-RS resource set (*NZP-CSI-RS-ResourceSet*) associated with the CSI report configuration to be configured with higher-layer parameters '*Trs-info*' and/or '*repetition*';

or the terminal equipment is configured with a CSI report configuration including a sub-configuration list, and the terminal equipment expects a non-zero power CSI-RS resource set (*NZP-CSI-RS-ResourceSet*) associated with the CSI report configuration to be not configured with higher-layer parameters '*Trs-info*' and/or '*repetition*';
or the terminal equipment is configured with a CSI report configuration including a sub-configuration list, and the terminal equipment in a radio resource control (RRC) connection mode does not expect to receive a higher-layer UE specific configuration non-zero power CSI-RS resource set (*NZP-CSI-RS- ResourceSet*), wherein the non-zero power CSI-RS resource set (*NZP-CSI-RS-ResourceSet*) is configured with higher-layer parameters 'Trs-info' and/or 'repetition';
or the terminal equipment does not expect to be configured with a CSI report configuration (*CSI-ReportConfig*) linked to a CSI resource configuration (*CSI-ResourceConfig*), wherein the CSI resource configuration (*CSI-ResourceConfig*) includes a non-zero power CSI-RS resource set (*NZP-CSI-RS-ResourceSet*) configured with higher-layer parameters '*Trs-info*' and/or '*repetition*', and the CSI report configuration (*CSI-ReportConfig*) is configured with a sub-configuration list;
or the terminal equipment is configured with a CSI report configuration including a sub-configuration list, and the terminal equipment does not expect to be configured with a non-zero power CSI-RS resource set (*NZP-CSI-RS-ResourceSet*) configured with higher-layer parameters '*Trs-info*' and/or '*repetition*'.

The embodiments above only schematically illustrate the present application, but the present application is not limited to this, and appropriate variations may also be made on the basis of the above embodiments. For example, the above embodiments may be used separately, or one or more of the above embodiments may be combined.

It can be seen from above embodiments that CSI reporting can be performed even if in a case that there is only one CSI-RS resource set and part of CSI-RS resources are later than a CSI reference resource, thereby being able to reduce a drop rate of a CSI report in some scenarios (such as an energy-saving mode) of wireless communication applications, and improving overall performance of the network.

### Embodiments of a Third Aspect

The embodiments of the present application provide an apparatus for reporting channel state information (CSI). The apparatus may be, for example, a terminal equipment, or one or more parts or components configured in the terminal equipment, and the same content as the embodiment of the first aspect will not be repeated.

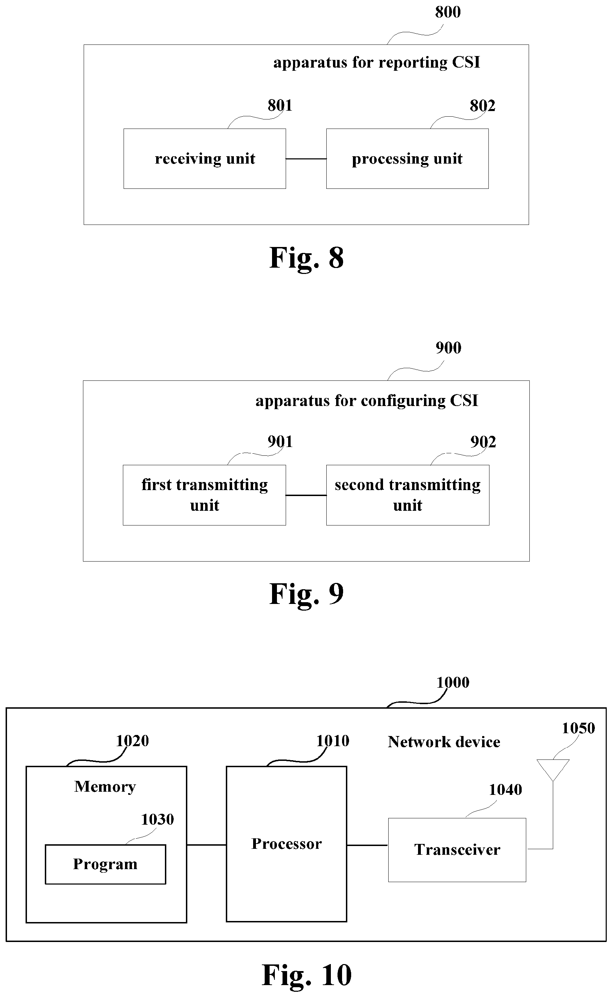

FIG. 8 is a schematic diagram of an apparatus for reporting channel state information (CSI) in the embodiments of the present application. As shown in FIG. 8, an apparatus 800 for reporting channel state information (CSI) includes:
a receiving unit 801 configured to receive a CSI report configuration from a network device, the CSI report configuration including L sub-configurations; and receive indication information from the network device, the indication information being at least used for indicating and/or triggering and/or activating N sub-configurations of the L sub-configurations; and
a processing unit 802 configured to report or drop a CSI report according to a CSI reference resource and the indicated and/or triggered and/or activated N sub-configurations.

In some embodiments, one of the L sub-configurations includes port subset indication information or CSI-RS list information; when the sub-configuration contains the CSI-RS list information, the sub-configuration corresponds to at least one CSI-RS.

In some embodiments, the CSI reference resource is determined at least according to the slot for CSI reporting; the L sub-configurations are used for semi-persistent CSI reporting or aperiodic CSI reporting.

In some embodiments, the processing unit 802 is configured to report the CSI report in a case that CSI-RS resources of the indicated and/or triggered and/or activated N sub-configurations are all no later than the CSI reference resource, and the CSI report corresponds to the N sub-configurations;
drop the CSI report in a case that at least one CSI-RS resource of the indicated and/or triggered and/or activated N sub-configurations is later than the CSI reference resource, and the CSI report corresponds to the N sub-configurations.

In some embodiments, the processing unit 802 is configured to report the CSI report after receiving at least one CSI-RS transmission occasion associated with the triggered sub-configurations for channel measurement and/or at least one CSI-RS and/or CSI-IM transmission occasion associated with the triggered sub-configurations for interference measurement that are no later than the CSI reference resource; otherwise, drop the CSI report.

In some embodiments, the processing unit 802 is configured to, after channel state information report configuration (reconfiguration) or serving cell activation or BWP change or activation of SP-CSI, report the CSI report only after receiving at least one CSI-RS transmission occasion associated with the triggered sub-configurations for channel measurement and/or at least one CSI-RS and/or CSI-IM transmission occasion associated with the triggered sub-configurations for interference measurement that are no later than the CSI reference resource; otherwise, drop the CSI report.

In some embodiments, the processing unit 802 is configured to report the CSI report after receiving at least one CSI-RS transmission occasion of each CSI-RS resource in a CSI-RS resource set associated with all triggered sub-configurations for channel measurement and/or at least one CSI-RS and/or CSI-IM transmission occasion of each CSI-RS/CSI-IM resource in a CSI-RS/CSI-IM resource set associated with all triggered sub-configurations for interference measurement no later than the CSI reference resource; otherwise drop the CSI report.

In some embodiments, the processing unit 802 is configured to report the CSI report only after receiving at least one CSI-RS transmission occasion of each CSI-RS resource in a CSI-RS resource set associated with all triggered sub-configurations for channel measurement and/or at least one CSI-RS and/or CSI-IM transmission occasion of each CSI-RS/CSI-IM resource in a CSI-RS/CSI-IM resource set associated with all triggered sub-configurations for interference measurement no later than the CSI reference resource, after channel state information report configuration (reconfiguration) or serving cell activation or BWP change or activation of SP-CSI; otherwise drop the CSI report.

In some embodiments, a reporting quantity '*cri-RSRP-Index*' and/or '*none*' in the CSI report configuration is not applied to network energy saving.

In some embodiments, the CSI report configuration includes a sub-configuration list and is provided by a higher-layer parameter *csi-ReportSubConfigList*, and the terminal equipment does not expect the higher-layer parameter *reportQuantity* to be set as '*cri-RSRP-Index*' and/or '*none*'.

In some embodiments, the CSI report configuration includes a sub-configuration list and is provided by a higher-layer parameter *csi-ReportSubConfigList*, and the terminal equipment does not expect the higher-layer parameter *reportQuantity* to be set as 'cri-RSRP', 'cri-SINR', 'cri-SINR- Index', '*cri-RSRP-Index*' or '*none*'.

In some embodiments, '*Trs-info*' and/or '*repetition*' configured in the CSI-RS resource set (*CSI-RS-ResourceSet*) associated with the CSI report configuration is not applied to network energy saving.

In some embodiments, the terminal equipment is configured with a CSI report configuration including a sub-configuration list, and the terminal equipment does not expect a non-zero power CSI-RS resource set (*NZP-CSI-RS-ResourceSet*) associated with the CSI report configuration to be configured with higher-layer parameters '*Trs-info*' and/or '*repetition*';
or the terminal equipment is configured with a CSI report configuration including a sub-configuration list, and the terminal equipment expects the non-zero power CSI-RS resource set (*NZP-CSI-RS-ResourceSet*) associated with the CSI report configuration to be not configured with higher-layer parameters '*Trs-info*' and/or '*repetition*';
or the terminal equipment is configured with a CSI report configuration including a sub-configuration list, and the terminal equipment in a radio resource control (RRC) connection mode does not expect to receive a higher-layer UE specific configuration non-zero power CSI-RS resource set (*NZP-CSI-RS-ResourceSet*), wherein the non-zero power CSI-RS resource set (*NZP-CSI-RS-ResourceSet*) is configured with higher-layer parameters 'Trs-info' and/or 'repetition';
or the terminal equipment does not expect to be configured with a CSI report configuration (*CSI-ReportConfig*) linked to a CSI resource configuration (*CSI-ResourceConfig*), wherein the CSI resource configuration (*CSI-ResourceConfig*) includes a non-zero power CSI-RS resource set (*NZP-CSI-RS-ResourceSet*) configured with higher-layer parameters '*Trs-info*' and/or '*repetition*', and the CSI report configuration (*CSI-ReportConfig*) is configured with a sub-configuration list;
or the terminal equipment is configured with a CSI report configuration including a sub-configuration list, and the terminal equipment does not expect to be configured with a non-zero power CSI-RS resource set (*NZP-CSI-RS-ResourceSet*) configured with higher-layer parameters '*Trs-info*' and/or '*repetition*'.

It is worth noting that only the components or modules related to the present application are illustrated hereinbefore, but the present application is not limited to this. The apparatus 800 for reporting channel state information (CSI) may further include other components or modules, and the details of these components or modules can be seen by referring to the related art.

In addition, for the sake of simplicity, FIG. 8 only illustratively shows the connection relationship or signal trend between the individual components or modules, but it should be clear to those skilled in the art that various related techniques such as bus connections may be employed. The above individual components or modules can be implemented by hardware facilities such as a processor, a memory, a transmitter, a receiver, etc., which is not limited in the present application.

With the embodiments of the present application, CSI reporting can be performed even if in a case that there is only one CSI-RS resource set and part of CSI-RS resources are later than a CSI reference resource, thereby being able to reduce a drop rate of a CSI report in some scenarios (such as an energy-saving mode) of wireless communication applications, and improving overall performance of the network.

### Embodiments of a Fourth Aspect

The embodiments of the present application provide an apparatus for configuring channel state information (CSI). The apparatus may be, for example, a network device, or one or more parts or components configured in the network device, and the same content as the embodiments of the first and second aspects will not be repeated.

FIG. 9 is a schematic diagram of an apparatus for configuring channel state information (CSI) in the embodiments of the present application. As shown in FIG. 9, an apparatus 900 for configuring channel state information (CSI) includes:
a first transmitting unit 901 configured to transmit a CSI report configuration to a terminal equipment, the CSI report configuration including L sub-configurations; and
a second transmitting unit 902 configured to transmit indication information to the terminal equipment, the indication information being at least used for indicating and/or triggering and/or activating N sub-configurations of the L sub-configurations, wherein the terminal equipment reports or drops a CSI report according to a CSI reference resource and the indicated and/or triggered and/or activated N sub-configurations.

In some embodiments, one of the L sub-configurations includes port subset indication information or CSI-RS list information; when the sub-configuration contains the CSI-RS list information, the sub-configuration corresponds to at least one CSI-RS.

In some embodiments, the CSI reference resource is determined at least according to a slot for CSI reporting; the L sub-configurations are used for semi-persistent CSI reporting or aperiodic CSI reporting.

In some embodiments, a reporting quantity '*cri-RSRP-Index*' and/or '*none*' in the CSI report configuration is not applied to network energy saving.

In some embodiments, the CSI report configuration includes a sub-configuration list and is provided by a higher-layer parameter *csi-ReportSubConfigList*, and the terminal equipment does not expect the higher-layer parameter *reportQuantity* to be set as '*cri-RSRP-Index*' and/or '*none*'.

In some embodiments, the CSI report configuration includes a sub-configuration list and is provided by a higher-layer parameter *csi-ReportSubConfigList*, and the terminal equipment does not expect the higher-layer parameter *reportQuantity* to be set as 'cri-RSRP', 'cri-SINR', 'cri-SINR- Index', '*cri-RSRP-Index*' or '*none*'.

In some embodiments, '*Trs-info*' and/or '*repetition*' configured in the CSI-RS resource set (*CSI-RS-ResourceSet*) associated with the CSI report configuration is not applied to network energy saving.

In some embodiments, the terminal equipment is configured with a CSI report configuration including a sub-configuration list, and the terminal equipment does not expect a non-zero power CSI-RS resource set (*NZP-CSI-RS-ResourceSet*) associated with the CSI report configuration to be configured with higher-layer parameters '*Trs-info*' and/or '*repetition*';
or the terminal equipment is configured with a CSI report configuration including a sub-configuration list, and the terminal equipment expects the non-zero power CSI-RS resource set (*NZP-CSI-RS-ResourceSet*) associated with the CSI report configuration to be not configured with higher-layer parameters '*Trs-info*' and/or '*repetition*';
or the terminal equipment is configured with a CSI report configuration including a sub-configuration list, and the terminal equipment in a radio resource control (RRC) connection mode does not expect to receive a higher-layer UE specific configuration non-zero power CSI-RS resource set (*NZP-CSI-RS-ResourceSet*), wherein the non-zero power CSI-RS resource set (*NZP-CSI-RS-ResourceSet*) is configured with higher-layer parameters 'Trs-info' and/or 'repetition';
or the terminal equipment does not expect to be configured with a CSI report configuration (*CSI-ReportConfig*) linked to a CSI resource configuration (*CSI-ResourceConfig*), wherein the CSI resource configuration (*CSI-ResourceConfig*) includes a non-zero power CSI-RS resource set (*NZP-CSI-RS-ResourceSet*) configured with higher-layer parameters '*Trs-info*' and/or '*repetition*', and the CSI report configuration (*CSI-ReportConfig*) is configured with a sub-configuration list;
or the terminal equipment is configured with a CSI report configuration including a sub-configuration list, and the terminal equipment does not expect to be configured with a non-zero power CSI-RS resource set (*NZP-CSI-RS-ResourceSet*) configured with higher-layer parameters '*Trs-info*' and/or '*repetition*'.

It is worth noting that only the components or modules related to the present application are illustrated hereinbefore, but the present application is not limited to this. The apparatus 900 for configuring channel state information (CSI) may further include other components or modules, and the details of these components or modules can be seen by referring to the related art.

In addition, for the sake of simplicity, FIG. 9 only illustratively shows the connection relationship or signal trend between the individual components or modules, but it should be clear to those skilled in the art that various related techniques such as bus connections may be employed. The above individual components or modules can be implemented by hardware facilities such as a processor, a memory, a transmitter, a receiver, etc., which is not limited in the present application.

With the embodiments of the present application, CSI reporting can be performed even if in a case that there is only one CSI-RS resource set and part of CSI-RS resources are later than a CSI reference resource, thereby being able to reduce a drop rate of a CSI report in some scenarios (such as an energy-saving mode) of wireless communication applications, and improving overall performance of the network.

### Embodiments of a Fifth Aspect

The embodiments of the present application further provide a communication system, referring to FIG. 1, the same content as the embodiments in the first to fourth aspects will not be repeated.

In some embodiments, the communication system 100 may at least include:
a network device configured to transmit a CSI report configuration to a terminal equipment, the CSI report configuration including L sub-configurations; transmit indication information to the terminal equipment, the indication information being at least used for indicating and/or triggering and/or activating N sub-configurations of the L sub-configurations; and
a terminal equipment configured to report or drop a CSI report according to a CSI reference resource and the indicated and/or triggered and/or activated N sub-configurations.

The embodiments of the present application further provide a network device, which may be, for example, a base station, but which is not limited in the present application, and may also be other network devices.

FIG. 10 is a schematic diagram of composition of the network device in the embodiments of the present application. As shown in FIG. 10, a network device 1000 may include a processor 1010 (such as a central processing unit (CPU)) and a memory 1020; the memory 1020 is coupled to the processor 1010. The memory 1020 may store various data and also may store a program 1030 for information processing, and the program 1030 is executed under the control of the processor 1010.

For example, the processor 1010 may be configured to execute the program to implement the method for configuring channel state information as described in the embodiments of the second aspect. For example, the processor 1010 may be configured to perform the following controls of: transmitting a CSI report configuration to a terminal equipment, the CSI report configuration including L sub-configurations; and transmitting indication information to the terminal equipment, the indication information being at least used for indicating and/or triggering and/or activating N sub-configurations of the L sub-configurations.

In addition, as shown in FIG. 10, the network device 1000 may further include: a transceiver 1040 and an antenna 1050, etc., wherein the functionalities of the above components are similar to the related art, and will not be repeated here. It is worth noting that the network device 1000 is not necessarily required to include all of the components shown in FIG. 10; in addition, the network device 1000 may further include components not shown in FIG. 10, with reference to the related art.

The embodiments of the present application further provide a terminal equipment, but which is not limited in the present application, and can also be other devices.

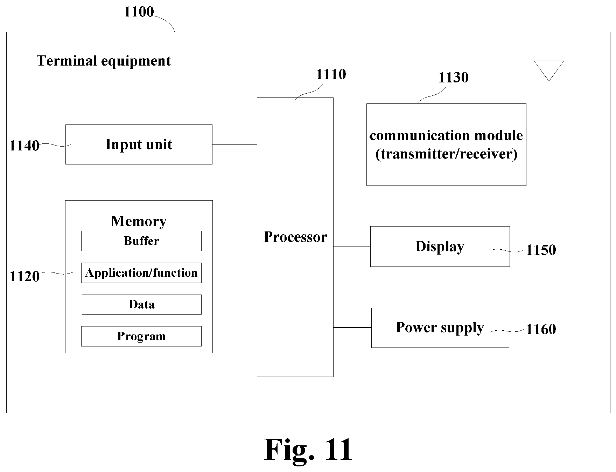

FIG. 11 is a schematic diagram of a terminal equipment in the embodiment of the present application. As shown in FIG. 11, the terminal equipment 1100 may include a processor 1110 and a memory 1120; the memory 1120 stores data and program, and is coupled to the processor 1110. It is worth noting that this figure is exemplary; other types of structures may also be used in addition to or instead of the structure to implement telecommunications functions or other functions.

For example, the processor 1110 may be configured to execute the program to implement the method for reporting channel state information as described in the embodiments of the first aspect. For example, the processor 1110 may be configured to perform the following controls of: receiving a CSI report configuration from a network device, the CSI report configuration including L sub-configurations; receiving indication information from the network device, the indication information being at least used for indicating and/or triggering and/or activating N sub-configurations of the L sub-configurations; and reporting or dropping a CSI report according to a CSI reference resource and the indicated and/or triggered and/or activated N sub-configurations.

As shown in FIG. 11, the terminal equipment 1100 may further include a communication module 1130, an input unit 1140, a display 1150, and a power supply 1160. The functions of the above components are similar to the relevant art, and will not be repeated here. It is worth noting that the terminal equipment 1100 is not necessarily required to include all of the components shown in FIG. 11, and the above components are not essential; in addition, the terminal equipment 1100 may further include components not shown in FIG. 11, with reference to the relevant art.

The embodiments of the present application further provide a computer program which, when being executed in the terminal equipment, causes the terminal equipment to execute the method for reporting channel state information (CSI) described in the embodiments of the first aspect.

The embodiments of the present application further provide a storage medium storing a computer program which causes the terminal equipment to execute the method for reporting channel state information (CSI) described in the embodiments of the first aspect.

The embodiments of the present application further provide a computer program which, when being executed in the network device, causes the terminal equipment to execute the method for configuring channel state information (CSI) described in the embodiments of the second aspect.

The embodiments of the present application further provide a storage medium storing a computer program which causes the network device to execute the method for configuring channel state information (CSI) described in the embodiments of the second aspect.

The above apparatuses and methods of the present application can be implemented by hardware or by hardware combined with software. Th present disclosure relates to a computer readable program which, when being executed by a logic unit, enables the logic unit to implement the apparatuses or components mentioned above, or enables the logic unit to implement the methods or steps described above. The present application also relates to storage medium for storing the above programs, such as a hard disk, a magnetic disk, a compact disc, a DVD, a flash memory, etc.

The method/apparatus described in conjunction with the embodiments of the present application may be directly embodied as hardware, a software module executed by the processor, or a combination of both. For example, one or more of the functional block diagrams and/or combination thereof shown in the drawing may correspond to both software modules and hardware modules of the computer program flow. These software modules can correspond to the steps shown in the drawings respectively. These hardware modules can be realized, for example, by solidifying these software modules using field programmable gate arrays (FPGA).

The software module may reside in an RAM memory, a flash memory, an ROM memory, an EPROM memory, an EEPROM memory, a register, a hard disk, a removable disk, a CD-ROM, or a storage medium in any other form known in the art. A storage medium can be coupled to a processor so that the processor can read information from the storage medium and write information to the storage medium; or the storage medium can be a constituent part of the processor. The processor and the storage medium can be located in the ASIC. The software module can be stored in the memory of the mobile terminal or in a memory card that can be inserted into the mobile terminal. For example, if a device (such as a mobile terminal) uses a large-capacity MEGA-SIM card or a large-capacity flash memory device, the software module can be stored in the MEGA-SIM card or the large-capacity flash memory device.

One or more of the functional blocks and/or combination thereof shown in the drawing may be implemented as a general-purpose processor, a digital signal processor (DSP), an application-specific integrated circuit (ASIC), a field programmable gate array (FPGA) or other programmable logic device, a discrete gate or a transistor logic device, a discrete hardware component, or any appropriate combination thereof, for performing the functions described in the present application. One or more of the functional blocks and/or combination thereof shown in the drawing may also be implemented as combination of computing devices, such as combination of DSP and a microprocessor, multiple microprocessors, one or more microprocessors combined with DSP communication, or any other such configuration.

The present application is described in combination with specific embodiments hereinabove, but a person skilled in the art should know clearly that the description is exemplary, but not limitation to the protection scope of the present application. A person skilled in the art can make various variations and modifications to the present application according to spirit and principle of the application, and these variations and modifications should also be within the scope of the present application.

For implementation including the above embodiments, the following supplements are further disclosed:
1. A method for reporting channel state information (CSI), including:
   receiving, by a terminal equipment, a CSI report configuration from a network device, the CSI report configuration including L sub-configurations;
   receiving, by the terminal equipment, indication information from the network device, the indication information being at least used for indicating and/or triggering and/or activating N sub-configurations of the L sub-configurations; and
   reporting or dropping, by the terminal equipment, a CSI report according to a CSI reference resource and the indicated and/or triggered and/or activated N sub-configurations.
2. The method according to supplement 1, wherein one of the L sub-configurations includes port subset indication information or CSI-RS list information; when the sub-configuration contains the CSI-RS list information, the sub-configuration corresponds to at least one CSI-RS;
   the CSI reference resource is determined at least according to a slot for CSI reporting; the L sub-configurations are used for semi-persistent CSI reporting or aperiodic CSI reporting.
3. The method according to supplement 1, wherein the terminal equipment reports or drops a CSI report according to a CSI reference resource and the indicated and/or triggered and/or activated N sub-configurations, including:
   the terminal equipment reports the CSI report in the case that CSI-RS resources of the indicated and/or triggered and/or activated N sub-configurations are all no later than the CSI reference resource, and the CSI report corresponds to the N sub-configurations; and
   the terminal equipment drops the CSI report in the case that at least one CSI-RS resource of the indicated and/or triggered and/or activated N sub-configurations is later than the CSI reference resource, and the CSI report corresponds to the N sub-configurations.
4. The method according to supplement 1, wherein the terminal equipment reports or drops a CSI report according to a CSI reference resource and the indicated and/or triggered and/or activated N sub-configurations, including:
   the terminal equipment reports the CSI report after receiving at least one CSI-RS transmission occasion associated with the triggered sub-configurations for channel measurement and/or at least one CSI-RS and/or CSI-IM transmission occasion associated with the triggered sub-configurations for interference measurement that are no later than the CSI reference resource; otherwise, drops the CSI report;
      or,
   the terminal equipment reports the CSI report after receiving at least one CSI-RS transmission occasion of each CSI-RS resource in a CSI-RS resource set associated with all triggered sub-configurations for channel measurement and/or at least one CSI-RS and/or CSI-IM transmission occasion of each CSI-RS/CSI-IM resource in a CSI-RS/CSI-IM resource set associated with all triggered sub-configurations for interference measurement no later than the CSI reference resource; otherwise drops the CSI report.
5. The method according to supplement 1, wherein the terminal equipment reports or drops a CSI report according to a CSI reference resource and the indicated and/or triggered and/or activated N sub-configurations, including:
   the terminal equipment, after channel state information report configuration (reconfiguration) or serving cell activation or BWP change or activation of SP-CSI, reports the CSI report only after receiving at least one CSI-RS transmission occasion associated with the triggered sub-configurations for channel measurement and/or at least one CSI-RS and/or CSI-IM transmission occasion associated with the triggered sub-configurations for interference measurement that are no later than the CSI reference resource; otherwise, drops the CSI report;
      or,
   the terminal equipment reports the CSI report only after receiving at least one CSI-RS transmission occasion of each CSI-RS resource in a CSI-RS resource set associated with all triggered sub-configurations for channel measurement and/or at least one CSI-RS and/or CSI-IM transmission occasion of each CSI-RS/CSI-IM resource in a CSI-RS/CSI-IM resource set associated with all triggered sub-configurations for interference measurement no later than the CSI reference resource, after channel state information report configuration (reconfiguration) or serving cell activation or BWP change or activation of SP-CSI; otherwise drops the CSI report.
6. A method for reporting channel state information (CSI), including:
   receiving, by a terminal equipment, a CSI report configuration from a network device, the CSI report configuration including L sub-configurations;
   receiving, by the terminal equipment, indication information from the network device, the indication information being at least used for indicating and/or triggering and/or activating N sub-configurations of the L sub-configurations, wherein a reporting quantity '*cri-RSRP-Index*' and/or '*none*' in the CSI report configuration is not applied to network energy saving.
7. A method for reporting channel state information (CSI), including:
   receiving, by a terminal equipment, a CSI report configuration from a network device, the CSI report configuration including L sub-configurations;
   receiving, by the terminal equipment, indication information from the network device, the indication information being at least used for indicating and/or triggering and/or activating N sub-configurations of the L sub-configurations,
   wherein the CSI report configuration includes a sub-configuration list and is provided by a higher-layer parameter *csi-ReportSubConfigList*, and the terminal equipment does not expect a higher-layer parameter *reportQuantity* to be set as '*cri-RSRP-Index*' and/or '*none*'.
8. A method for reporting channel state information (CSI), including:
   receiving, by a terminal equipment, a CSI report configuration from a network device, the CSI report configuration including L sub-configurations;
   receiving, by the terminal equipment, indication information from the network device, the indication information being at least used for indicating and/or triggering and/or activating N sub-configurations of the L sub-configurations,
   wherein the CSI report configuration includes a sub-configuration list and is provided by a higher-layer parameter *csi-ReportSubConfigList*, and the terminal equipment does not expect the higher-layer parameter *reportQuantity* to be set as 'cri-RSRP', 'cri-SINR', 'cri-SINR- Index', '*cri-RSRP-Index*' or '*none*'.
9. A method for reporting channel state information (CSI), including:
   receiving, by a terminal equipment, a CSI report configuration from a network device, the CSI report configuration including L sub-configurations;
   receiving, by the terminal equipment, indication information from the network device, the indication information being at least used for indicating and/or triggering and/or activating N sub-configurations of the L sub-configurations,
   wherein '*Trs-info*' and/or '*repetition*' configured in the CSI-RS resource set (*CSI-RS-ResourceSet*) associated with the CSI report configuration is not applied to network energy saving.
10. A method for reporting channel state information (CSI), including:
   receiving, by a terminal equipment, a CSI report configuration from a network device, the CSI report configuration including L sub-configurations;
   receiving, by the terminal equipment, indication information from the network device, the indication information being at least used for indicating and/or triggering and/or activating N sub-configurations of the L sub-configurations,
   wherein the terminal equipment is configured with a CSI report configuration including a sub-configuration list, and the terminal equipment does not expect a non-zero power CSI-RS resource set (*NZP-CSI-RS-ResourceSet*) associated with the CSI report configuration to be configured with higher-layer parameters '*Trs-info*' and/or '*repetition*';
   or the terminal equipment is configured with a CSI report configuration including a sub-configuration list, and the terminal equipment expects the non-zero power CSI-RS resource set (*NZP-CSI-RS-ResourceSet*) associated with the CSI report configuration to be not configured with higher-layer parameters '*Trs-info*' and/or '*repetition*';
   or the terminal equipment is configured with a CSI report configuration including a sub-configuration list, and the terminal equipment in a radio resource control (RRC) connection mode does not expect to receive a higher-layer UE specific configuration non-zero power CSI-RS resource set (*NZP-CSI-RS-ResourceSet*), wherein the non-zero power CSI-RS resource set (*NZP-CSI-RS-ResourceSet*) is configured with higher-layer parameters 'Trs-info' and/or 'repetition';
   or the terminal equipment does not expect to be configured with a CSI report configuration (*CSI-ReportConfig*) linked to a CSI resource configuration (*CSI-ResourceConfig*), wherein the CSI resource configuration (*CSI-ResourceConfig*) includes a non-zero power CSI-RS resource set (*NZP-CSI-RS-ResourceSet*) configured with higher-layer parameters '*Trs-info*' and/or '*repetition*', and the CSI report configuration (*CSI-ReportConfig*) is configured with a sub-configuration list;
   or the terminal equipment is configured with a CSI report configuration including a sub-configuration list, and the terminal equipment does not expect to be configured with a non-zero power CSI-RS resource set (*NZP-CSI-RS-ResourceSet*) configured with higher-layer parameters '*Trs-info*' and/or '*repetition*'.

## Claims

1. An apparatus for reporting channel state information, comprising:
a receiving unit configured to receive channel state information report configuration from a network device, the channel state information report configuration comprising L sub-configurations, and to receive indication information from the network device, the indication information being at least used for indicating and/or triggering and/or activating N sub-configurations of the L sub-configurations; and
a processing unit configured to report or drop a channel state information report according to a channel state information reference resource and the indicated and/or triggered and/or activated N sub-configurations.

2. The apparatus according to claim 1, wherein one of the L sub-configurations comprises port subset indication information or CSI-RS list information, and when a sub-configuration contains the CSI-RS list information, the sub-configuration corresponds to at least one CSI-RS.

3. The apparatus according to claim 1, wherein the channel state information reference resource is determined at least according to a slot for channel state information reporting, and the L sub-configurations are used for semi-persistent channel state information reporting or aperiodic channel state information reporting.

4. The apparatus according to claim 1, wherein the processing unit is configured to report the channel state information report in a case that CSI-RS resources of the indicated and/or triggered and/or activated N sub-configurations are all not later than the channel state information reference resource, the channel state information report corresponding to the N sub-configurations, and to drop the channel state information report in a case that at least one CSI-RS resource of the indicated and/or triggered and/or activated N sub-configurations is later than the channel state information reference resource, the channel state information report corresponding to the N sub-configurations.

5. The apparatus according to claim 1, wherein the processing unit is configured to report the channel state information report after receiving at least one CSI-RS transmission occasion associated with the triggered sub-configurations for channel measurement and/or at least one CSI-RS and/or CSI-IM transmission occasion associated with the triggered sub-configurations for interference measurement that are not later than the channel state information reference resource; otherwise, the processing unit is configured to drop the channel state information report;
or the processing unit is configured to report the channel state information report after receiving at least one CSI-RS transmission occasion of each CSI-RS resource in a CSI-RS resource set associated with the triggered sub-configurations for channel measurement and/or at least one CSI-RS and/or CSI-IM transmission occasion of each CSI-RS/CSI-IM resource in a CSI-RS/CSI-IM resource set associated with the triggered sub-configurations for interference measurement that are not later than the channel state information reference resource; otherwise, the processing unit is configured to drop the channel state information report.

6. The apparatus according to claim 1, wherein the processing unit is configured to, after channel state information report configuration (reconfiguration) or serving cell activation or BWP change or activation of SP-CSI, report the channel state information report only after receiving at least one CSI-RS transmission occasion associated with the triggered sub-configurations for channel measurement and/or at least one CSI-RS and/or CSI-IM transmission occasion associated with the triggered sub-configurations for interference measurement that are not later than the channel state information reference resource; otherwise, the processing unit is configured to drop the channel state information report;
or the processing unit is configured to, after channel state information report configuration (reconfiguration) or serving cell activation or BWP change or activation of SP-CSI, report the channel state information report only after receiving at least one CSI-RS transmission occasion of each CSI-RS resource in a CSI-RS resource set associated with the triggered sub-configurations for channel measurement and/or at least one CSI-RS and/or CSI-IM transmission occasion of each CSI-RS/CSI-IM resource in a CSI-RS/CSI-IM resource set associated with the triggered sub-configurations for interference measurement that are not later than the channel state information reference resource; otherwise, the processing unit is configured to drop the channel state information report.

7. The apparatus according to claim 1, wherein a reporting quantity *cri-RSRP-Index* and/or *none* in the channel state information report configuration is not applied to network energy saving.

8. The apparatus according to claim 1, wherein the channel state information report configuration comprises a sub-configuration list and is provided by a higher-layer parameter *csi-ReportSubConfigList*, and a terminal equipment does not expect a higher-layer parameter *reportQuantity* to be set as *cri-RSRP-Index* and/or *none*.

9. The apparatus according to claim 1, wherein the channel state information report configuration comprises a sub-configuration list and is provided by a higher-layer parameter *csi-ReportSubConfigList*, and a terminal equipment does not expect a higher-layer parameter *reportQuantity* to be set as *cri-RSRP*, *cri-SINR*, *cri-SINR- Index*, *cri-RSRP-Index*, or *none*.

10. The apparatus according to claim 1, wherein configured *Trs-info* and/or *repetition* in a CSI-RS resource set associated with the channel state information report configuration are not applied to network energy saving.

11. The apparatus according to claim 1, wherein,
a terminal equipment is configured with a channel state information report configuration comprising a sub-configuration list, and the terminal equipment does not expect a non-zero power CSI-RS resource set associated with the channel state information report configuration to be configured with higher-layer parameters *Trs-info* and/or *repetition*,
or a terminal equipment is configured with a channel state information report configuration comprising a sub-configuration list, and the terminal equipment expects a non-zero power CSI-RS resource set associated with the channel state information report configuration to be not configured with higher-layer parameters *Trs-info* and/or *repetition*,
or a terminal equipment is configured with a channel state information report configuration comprising a sub-configuration list, and the terminal equipment in a radio resource control connection mode does not expect to receive a higher-layer UE specific configuration non-zero power CSI-RS resource set, wherein the non-zero power CSI-RS resource set is configured with higher-layer parameters *Trs-info* and/or *repetition*,
or a terminal equipment does not expect to be configured with a channel state information report configuration linked to a channel state information resource configuration, wherein the channel state information resource configuration comprises a non-zero power CSI-RS resource set configured with higher-layer parameters *Trs-info* and/or *repetition*, and the channel state information report configuration is configured with a sub-configuration list;
or a terminal equipment is configured with a channel state information report configuration comprising a sub-configuration list, and the terminal equipment does not expect to be configured with a non-zero power CSI-RS resource set configured with higher-layer parameters *Trs-info* and/or *repetition*.

12. An apparatus for configuring channel state information, comprising:
a first transmitting unit configured to transmit a channel state information report configuration to a terminal equipment, the channel state information report configuration comprising L sub-configurations; and
a second transmitting unit configured to transmit indication information to the terminal equipment, the indication information being at least used for indicating and/or triggering and/or activating N sub-configurations of the L sub-configurations, wherein the terminal equipment reports or drops a channel state information report according to a channel state information reference resource and the indicated and/or triggered and/or activated N sub-configurations.

13. The apparatus according to claim 12, wherein one of the L sub-configurations comprises port subset indication information or CSI-RS list information, and when a sub-configuration contains the CSI-RS list information, the sub-configuration corresponds to at least one CSI-RS.

14. The apparatus according to claim 12, wherein the channel state information reference resource is determined at least according to a slot for channel state information reporting, and the L sub-configurations are used for semi-persistent channel state information reporting or aperiodic channel state information reporting.

15. The apparatus according to claim 12, wherein a reporting quantity *cri-RSRP-Index* and/or *none* in the channel state information report configuration are not applied to network energy saving.

16. The apparatus according to claim 12, wherein the channel state information report configuration comprises a sub-configuration list and is provided by a higher-layer parameter *csi-ReportSubConfigList*, and the terminal equipment does not expect a higher-layer parameter *reportQuantity* to be set as *cri-RSRP-Index* and/or *none*.

17. The apparatus according to claim 12, wherein the channel state information report configuration comprises a sub-configuration list and is provided by a higher-layer parameter *csi-ReportSubConfigList*, and the terminal equipment does not expect the higher-layer parameter *reportQuantity* to be set as *cri-RSRP*, *cri-SINR*, *cri-SINR- Index*, *cri-RSRP-Index*, or *none*.

18. The apparatus according to claim 12, wherein configured *Trs-info* and/or *repetition* in a CSI-RS resource set associated with the channel state information report configuration are not applied to network energy saving.

19. The apparatus according to claim 12, wherein,
the terminal equipment is configured with a channel state information report configuration comprising a sub-configuration list, and the terminal equipment does not expect a non-zero power CSI-RS resource set associated with the channel state information report configuration to be configured with higher-layer parameters *Trs-info* and/or *repetition*,
or the terminal equipment is configured with a channel state information report configuration comprising a sub-configuration list, and the terminal equipment expects the non-zero power CSI-RS resource set associated with the channel state information report configuration to be not configured with higher-layer parameters *Trs-info* and/or *repetition*,
or the terminal equipment is configured with a channel state information report configuration comprising a sub-configuration list, and the terminal equipment in a radio resource control connection mode does not expect to receive a higher-layer UE specific configuration non-zero power CSI-RS resource set, wherein the non-zero power CSI-RS resource set is configured with higher-layer parameters *Trs-info* and/or *repetition*,
or the terminal equipment does not expect to be configured with a channel state information report configuration linked to a channel state information resource configuration, wherein the channel state information resource configuration comprises a non-zero power CSI-RS resource set configured with higher-layer parameters *Trs-info* and/or *repetition*, and the channel state information report configuration is configured with a sub-configuration list,
or the terminal equipment is configured with a channel state information report configuration comprising a sub-configuration list, and the terminal equipment does not expect to be configured with a non-zero power CSI-RS resource set configured with higher-layer parameters *Trs-info* and/or *repetition*.

20. A communication system, comprising:
a network device configured to transmit channel state information report configuration to a terminal equipment, the channel state information report configuration comprising L sub-configurations, and to transmit indication information to the terminal equipment, the indication information being at least used for indicating and/or triggering and/or activating N sub-configurations of the L sub-configurations; and
a terminal equipment configured to report or drop a channel state information report according to a channel state information reference resource and the indicated and/or triggered and/or activated N sub-configurations.
